# Europäisches Patentamt
# European Patent Office
# Office européen des brevets

(11) Veröffentlichungsnummer: **0 219 022**
**B1**

(12) # EUROPÄISCHE PATENTSCHRIFT

(45) Veröffentlichungstag der Patentschrift:
**30.08.89**

(51) Int. Cl.⁴: **H02G 3/18**

(21) Anmeldenummer: **86113761.0**

(22) Anmeldetag: **04.10.86**

(54) Elektrisches Installationsgerät und Verfahren zu dessen Herstellung.

(30) Priorität: **09.10.85 DE 3536051**

(43) Veröffentlichungstag der Anmeldung:
**22.04.87 Patentblatt 87/17**

(45) Bekanntmachung des Hinweises auf die Patenterteilung:
**30.08.89 Patentblatt 89/35**

(84) Benannte Vertragsstaaten:
**AT BE CH DE FR LI NL SE**

(56) Entgegenhaltungen:
**BE-A- 647 246**
**DE-A- 2 420 017**
**DE-C- 849 259**
**FR-A- 2 345 838**
**US-A- 3 955 463**

(73) Patentinhaber: **Popp & Co. GmbH, Kulmbacher Strasse 27, D-8582 Bad Berneck(DE)**

(72) Erfinder: **Greiner, Georg, Brunnbergstrasse 25, D-8583 Bischofsgrün(DE)**

(74) Vertreter: **Tergau, Enno et al, Hefnersplatz 3 Postfach 11 93 47, D-8500 Nürnberg 11(DE)**

ACTORUM AG

**Beschreibung**

Die Erfindung betrifft ein Verfahren zur Herstellung eines elektrischen Installationsgerätes sowie ein Installationsgerät selbst, wie es die im Oberbegriff des Anspruches 12 angegebenen, bekannten Merkmale aufweist.

Derartige Installationsgeräte sind beispielsweise aus DE-PS 849 259 oder DE-OS 24 20 017 bekannt. Sie dienen zur Halterung von elektrischen Schaltern, Steckdosen u.dgl. in einer Wanddose, in die die anzuschließenden elektrischen Versorgungsleitungen münden. Das Installationsgerät weist einen die Anschlußkontakte für die Wandversorgungsleitungen und die externen Anschluß- bzw. Bedienungselemente tragenden Gerätesockel und einen den Gerätesockel in der Wanddose fixierenden Tragring auf. Die Gerätesockel enthalten also neben den Anschlußklemmen beispielsweise einen elektrischen Schalter mit der Betätigungswippe oder die Steckbuchsen für einen Stecker. Gegebenenfalls können als Schutzmaßnahmen entsprechende Abdeckungen oder Steckdosen zur Aufnahme eines Steckers am Gerätesockel fixiert werden.

Nach dem Anschließen der Leitungen an die Kontaktklemmen wird der Gerätesockel in die Wanddose eingeführt und dort mittels des Tragringes befestigt. Dazu weist dieser in der Regel zwei in einem Spreizkrallenhalter beweglich befestigte, winkelförmige Spreizkrallen auf. Durch das Anziehen je einer Schraube, deren Kopf üblicherweise auf den kürzeren, inneren Hebel der Spreizkralle drückt, wird der längere Krallenarm nach außen bis zur festen Anlage an die Doseninnenwand gedrückt.

Die elektrischen Installationsgeräte gemäß der oben angegebenen Druckschriften weisen sowohl hinsichtlich ihrer Herstellung als auch bei ihrer Montage Nachteile auf. Bei dem Installationsgerät gemäß DE-OS 24 20 017 ist der Tragring zwar als einfach herstellbares Stanzbiegeteil ausgebildet, jedoch wirken die die Spreizkrallen in der Wanddose verspannenden Schrauben jeweils mit einer als gesondertes Bauteil ausgebildeten Gewindehülse im Gerätesockel zusammen. Diese bildet somit kein direktes Teil des Tragringes, wodurch die Fertigung und der Einbau dieses ausgesprochenen Massenerzeugnisses mit einem erhöhten Montage-, Material- und damit Kostenaufwand verbunden ist.

In DE-PS 849 259 ist zwar ein Tragring für das elektrische Installationsgerät gezeigt, der eine einstückig angeformte Mutter für die Schrauben zur Beaufschlagung der Spreizkrallen aufweist, jedoch ist diese als in einem gesonderten Fertigungszwischenschritt eingebrachte Gewindebohrung ausgebildet. Die Gewindelänge entspricht dabei lediglich der Materialstärke des plattenförmigen Ausgangsmaterials, wodurch die mechanische Festigkeit gering ist. Darüber hinaus liegt die Erstreckungsebene des Biegelappens, aus dem die Gewindebohrung ausgebildet ist, etwa rechtwinklig zur Einschraubrichtung. Beim Eindrehen der Fixierschraube wird also eine hohe Zugkraft auf den Biegelappen ausgeübt.

Ausgehend von den Nachteilen der Installationsgeräte nach dem Stande der Technik liegt der Erfindung die Aufgabe zugrunde, ein Verfahren zur Herstellung eines solchen Installationsgerätes anzugeben, bei dem der Fertigungsaufwand reduziert, gleichzeitig jedoch der fertige Erfindungsgegenstand funktionsgerecht seinem Anwendungszweck besser angepaßt ist.

Diese Aufgabe wird durch das im Anspruch 1 angegebene, erfindungsgemäße Verfahren zur Herstellung des elektrischen Installationsgerätes gelöst. Demnach wird in bekannter Weise aus einem band- oder plattenförmigen Flachmaterial, wie Metallblech od.dgl., eine im Herstellungsendzustand den Tragring des Installationsgerätes bildende Platine ausgestanzt. Als Ausgangsmaterial kann auch ein entsprechend verformbares Kunststoffmaterial verwendet werden. Die Platine weist im Flachzustand mindestens einen ebenen, ringförmigen Flansch und zwei oder mehr im Herstellungsendzustand jeweils einen Spreizkrallenhalter bildende, an den Innenrand des Flanschteiles in Gegenüberstellung angesetzte Materialstege auf. An den Innenenden der Materialstege sind über Zwischenstege angesetzte, im Herstellungsendzustand jeweils eine Gewindehülse bildende Hülsenplatten einstückig angeformt. Vorzugsweise gleichzeitig mit dem Stanzvorgang für diese Platine werden auf die Hülsenplatten Gewindepartien mittels spanloser Formgebung eingebracht, die im Herstellungsendzustand des Installationsgerätes die Gewindegänge der Gewindehülsen bilden. In einem anschließenden Fertigungsschritt werden die Materialstege zur Bildung der Spreizkrallenhalter etwa rechtwinklig zur Flanschebene abgebogen und die einander abgewandten Seitenkanten der Hülsenplatten jeweils zu einer in ihrer Längsachse etwa rechtwinklig zur Flanschebene angeordneten Gewindehülse mit den innenliegenden Gewindepartien zusammengeführt. Bevor der Tragring in den Gerätesockel eingesetzt und fixiert wird, werden in die Gewindehülsen jeweils Fixierschrauben eingeschraubt, die die Innenenden der in die Spreizkrallenhalter beweglich eingesetzten Spreizkrallen des Installationsgerätes beaufschlagt.

Als wesentlicher Vorteil des erfindungsgemäßen Verfahrens ergibt sich der Wegfall eines oder mehrerer Fertigungszwischenschritte, bei welchen durch zusätzliche Teile das Muttergewinde für die Fixierschrauben geschaffen werden muß. Demgegenüber verwendet das erfindungsgemäße Verfahren lediglich einfache Stanz-, Präge- und Biegeschritte, die besonders einfach auf Fertigungsautomaten durchgeführt werden können. Außerdem ist die funktionsmäßig zu jedem Spreizkrallenhalter gehörende Mutter ein dem Tragring fest zugeordnetes Bauelement, das bei der Montage des elektrischen Installationsgerätes nicht mehr gesondert - beispielsweise in den Kontaktträger - eingelegt werden muß. Damit ergeben sich auch Vorteile hinsichtlich des Arbeitsaufwandes bei der Endmontage der Geräte in Wanddosen.

Durch die zusätzliche Anformung von wechselständig abstehenden, zwischen sich Ausnehmungen bildenden Zungen an die einander abgewandten Seitenkanten der Hülsenplatten wird - ohne einen weiteren Fertigungsschritt in Kauf nehmen zu müssen - die Voraussetzung dafür geschaffen, daß die Gewindehülse im Herstellungsendzustand besonders formstabil ist und damit hohe Schraubkräfte aufnehmen kann. Dies wird gemäß Anspruch 3 dadurch erzielt, daß beim Zusammenführen der einander abgewandten Seitenkanten der Hülsenplatten jeweils wechselseitig die abstehenden Zungen an einer Seitenkante in die Ausnehmungen der gegenüberliegenden Seitenkante eingeführt werden. Damit ergibt sich ein Verzahnungseffekt, dessen wesentlicher Vorteil darin besteht, daß die beim Anziehen der Spannschrauben zum Aufspreizen der Spreizkrallen auftretenden Reaktionskräfte durch die einstückige Ausbildung von Spreizkrallenhaltern und den durch die Gewindehülsen gebildeten Muttern innerhalb des Tragringes aufgefangen werden. Bei den Installationsgeräten nach dem Stande der Technik wurden solche Kräfte primär vom dafür nicht vorgesehenen Isoliermaterial des Gerätesockels aufgenommen. Außerdem wird durch die Verzahnung die Gewindehülse in sich besonders stabil.

Um eine einwandfreie Funktion der Spreizkrallen zu ermöglichen, muß die Längsachse der Fixierschrauben gegenüber der Ebene der Spreizkrallenhalter nach innen versetzt sein. Dies erfolgt beim erfindungsgemäßen Gegenstand in fertigungstechnisch besonders einfacher Weise dadurch, daß die Zwischenstege zwischen den Materialstegen für die Spreizkrallenhalter und der Gewindehülse nach innen abgekröpft werden.

Die Ansprüche 6 bis 9 betreffen Weiterbildungen des erfinderischen Verfahrens, mit dem weitere fertigungstechnische Vorteile erzielt werden. Insbesondere wird das Zusammenführen der Hülsenplatten zur Gewindehülse vereinfacht, indem sie jeweils entlang zweier Biegegeraden zu Gewindehülsen mit einer Querschnittsform etwa eines gleichschenkeligen Dreiecks gebogen werden. Die Biegung entlang einer Biegegeraden über eine Werkzeugkante ist nämlich in der Regel weitaus problemloser durchzuführen, wie wenn eine ebene Platte über ein zylindrisches Werkzeug in eine Hülse mit rundem Querschnitt umgearbeitet werden muß. Abweichend von der dreieckigen Querschnittsform kann auch ein vieleckiger Querschnitt mit entsprechend höherer Anzahl von Biegegeraden gewählt werden.

Durch die dreieckige Querschnittsform der Gewindehülsen genügt es, wenn wie in Anspruch 7 angegeben, die Gewindepartien jeweils nur im Mittenbereich der einzelnen Rechteckabschnitte zwischen den Biegegeraden der Hülsenplatten eingebracht werden.

Die Ansprüche 8 bis 10 geben verschiedene Möglichkeiten zur Einformung der Gewindepartien in die Hülsenplatten an. Bei einer Riffelprägung gemäß Anspruch 8 kommt vor allem eine Spreizschraube mit metrischem Gewinde zur Verwendung in Betracht, wobei ein inniger Kontakt zwischen den Gewindegängen der beiden zusammenwirkenden Bauteile hohe übertragbare Kräfte gewährleistet, die eine besonders stabile Fixierung des Installationsgerätes in der Wanddose ermöglichen.

Die im Anspruch 9 und 10 angegebenen Formen für die Gewindeplatinen ermöglichen die Verwendung von einfachen, beispielsweise aus dem Karosseriebau bekannten Blechschrauben mit großer Steigung und Gewindetiefe zur Fixierung der Spreizkrallen.

In einer vorteilhaften Weiterbildung des erfindungsgemäßen Verfahrens gemäß Anspruch 11 werden beim Ausstanzen der Platine gleichzeitig - und damit ohne fertigungstechnischen Mehraufwand - parallel zu den die Spreizkrallenhalter bildenden Materialstegen verlaufende Lappen ausgebildet. Diese können nach der Biegung der Platine zum Tragring und nach dem Einsetzen des Gerätesockels mit ihren Freienden einwärts gebogen werden, um den Tragring im Gerätesockel zu fixieren.

Im Anspruch 12 ist das mit dem erfindungsgemäßen Verfahren hergestellte elektrische Installationsgerät mit seinen Merkmalen angegeben. Es erfüllt ebenfalls die eingangs genannte Erfindungsaufgabe, indem die Muttern zur Aufnahme der Fixierschrauben als mit dem Tragring einstückige Stanzbiegeteile ausgebildet sind, deren Innengewinde mittels spanloser Werkstückbearbeitung eingeformt ist. Die sich daraus ergebenden Vorteile entsprechen im wesentlichen den zu Anspruch 1 genannten. Die Fertigungsvorteile ergeben sich durch die Einformung des Innengewindes mittels spanloser Werkstückbearbeitung. Durch die mit dem Tragring einstückige Ausbildung der Muttern als Stanzbiegeteile werden zudem weitere Verbesserungen erzielt. Die Mutter muß nicht mehr als gesondertes Bauteil in den Tragring oder den Kontaktträger eingesetzt werden. Durch den Einsatz des erfindungsgemäßen Installationsgerätes kann damit die Bauendmontage der Elektroinstallation rationalisiert werden. Insbesondere entfällt auch das oft lästige Suchen nach heruntergefallenen Muttern. Letzendlich ist das erfindungsgemäße Installationsgerät trotz seiner einfachen Herstellbarkeit besonders robust und kann hohe Haltekräfte seines Tragringes in einer Wanddose übertragen, ohne daß ein Ausreißen des Muttergewindes oder ein Verbiegen zu befürchten wäre.

In den kennzeichnenden Merkmalen der Ansprüche 13 bis 17 sind vorteilhafte Weiterbildungen des Installationsgerätes angegeben, bei denen die Muttern zur Aufnahme der Fixierschrauben in ihrer Robustheit, inneren Stabilität und im Kraftschlußverhalten ihres Gewindes verbessert sind. Demnach können gemäß Anspruch 13 die Innengewinde jeweils aus mehreren einzelnen Gewindepartien zusammengesetzt sein, die verschiedene, vorteilhafte Formgestaltungen - je nach der verwendeten Schraubenart - aufweisen können.

Die im Anspruch 14 angegebene Formgestalt der im Querschnitt dreieckigen Mutter läßt sich besonders einfach durch Stanzen und Pressen realisieren.

Durch eine Ausbildung des Installationsgerätes gemäß der Ansprüche 15 und 16 erhalten die Muttern des Tragringes eine besondere Festigkeit sowohl in sich als auch in der Formsteife ihrer Verbindung zu den Spreizkrallenhaltern.

Die Ansprüche 18 bis 20 kennzeichnen alternative Möglichkeiten für die Gewindepartien. Alle genannten Möglichkeiten sind auf einfache Weise durch Pressen oder Stanzen realisierbar.

In den Ansprüchen 22 und 23 sind Maßnahmen angegeben, mit Hilfe derer der Gerätesockel besonders rationell im Tragring des Installationsgerätes fixiert werden kann. Darüber hinaus ist der Gerätesockel durch die Maßnahme gemäß Anspruch 24 in der gewünschten Lage zuverlässig im Tragring fixiert.

Anhand der beiliegenden Figuren werden Ausführungsbeispiele des Erfindungsgegenstandes sowie das erfinderische Verfahren näher erläutert. Es zeigen:

Fig. 1 eine Draufsicht auf die ausgestanzte Platine im Flachzustand,

Fig. 2 eine Draufsicht auf den aus der Platine gebildeten Tragring von der Flanschseite her,

Fig. 3 einen Schnitt gemäß der Geraden III-III nach Fig. 4,

Fig. 4 eine Seitenansicht des Tragringes gemäß Fig. 1, teilweise geschnitten entlang der Geraden IV-IV gemäß Fig. 2,

Fig. 5 eine Seitenansicht bzw. einen Teillängsschnitt durch ein erfindungsgemäßes Installationsgerät,

Fig. 6 eine Detaildraufsicht auf die vorgeprägte Hülsenplatte einer Platine im Flachzustand,

Fig 7 einen Längsschnitt durch eine aus der Hülsenplatte gemäß Fig. 6 gebildeten Mutter,

Fig. 8 einen Querschnitt durch die Mutter gemäß Fig. 7,

Fig. 9 eine Detaildraufsicht auf eine Hülsenplatte in einer alternativen Ausführungsform,

Fig. 10 einen Längsschnitt durch eine aus der Hülsenplatte gemäß Fig. 9 gebildeten Mutter,

Fig. 11 einen Querschnitt durch eine Mutter gemäß Fig. 10,

Fig. 12 eine Detaildraufsicht auf eine Hülsenplatte der Platine einer zweiten alternativen Ausführungsform,

Fig. 13 einen Längsschnitt durch eine aus der Hülsenplatte gemäß Fig. 12 gebildeten Mutter und

Fig. 14 einen Querschnitt durch die Mutter gemäß Fig. 13.

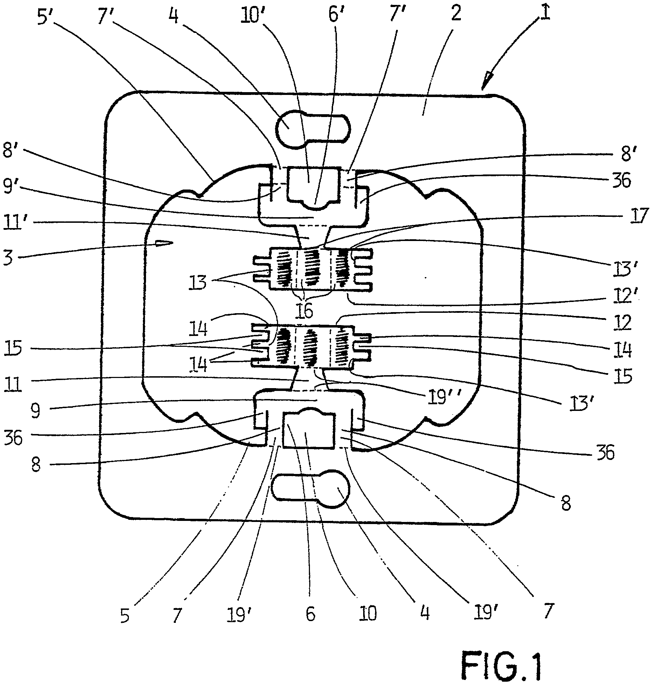

Anhand der Fig. 1 bis 5 wird im folgenden das erfindungsgemäße Verfahren zur Herstellung des elektrischen Installationsgerätes erläutert. Ausgangsmaterial ist ein bandförmiges Metallblech, aus dem mittels eines geeigneten Stanz-Prägewerkzeuges zuerst die Platine 1 gefertigt wird (Fig. 1). Diese weist im wesentlichen einen ebenen, ringförmigen Flansch 2 auf, der die innenliegende, im Herstellungsendzustand des Installationsgerätes den Gerätesockel aufnehmende Ausnehmung 3 umschließt. In den beiden gegenüberliegenden Flachseiten des im wesentlichen quadratischen, mit abgerundeten Ecken versehenen Flansches 2 sind Langlöcher 4 vorgesehen, die entweder zu seiner zusätzlichen Befestigung mittels Schrauben oder zur Anbringung von Abdeckungen verwendet werden.

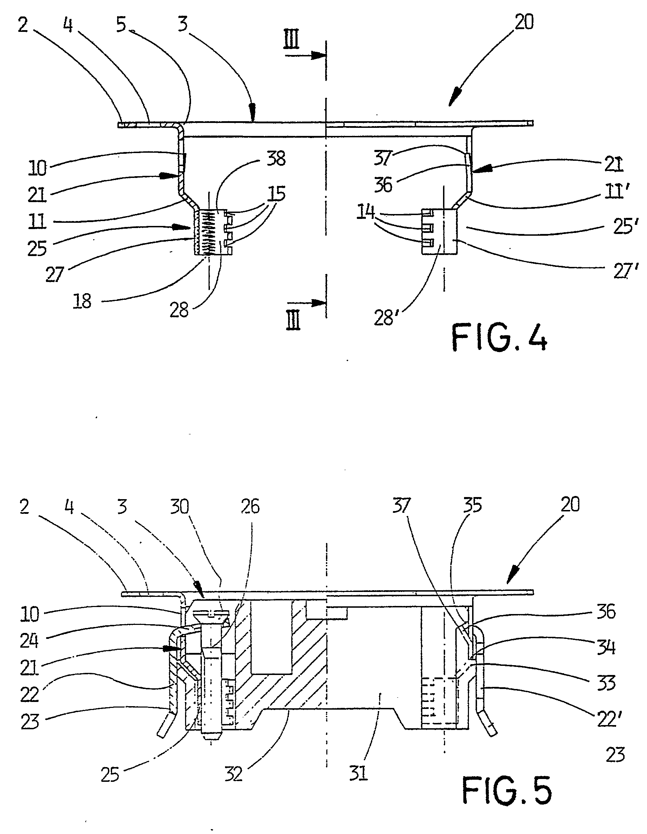

An seinen beiden gegenüberliegenden Innenrändern 5,5' setzt sich der Flansch 2 jeweils in U-förmigen Materialstegen 6,6' fort, deren U-Schenkelenden 7,7' an die Innenränder 5,5' einstückig angesetzt sind. In die von den U-Schenkeln 8,8' und der U-Basis 9,9' umschlossenen Öffnungen 10,10' sind im Herstellungsendzustand die Spreizkrallen eingesetzt (siehe dazu Fig. 5).

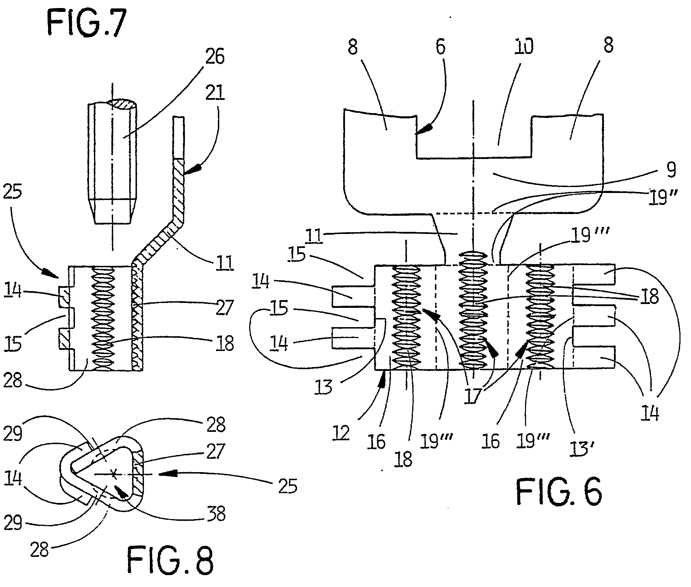

An der U-Basis 9,9' der Materialstege 6,6' schließt sich jeweils ein Zwischensteg 11,11' an, der sich mit zunehmendem Abstand von der zugehörigen U-Basis 9,9' trapezförmig verjüngt. Schließlich setzen sich die Zwischenstege 11,11' in die Hülsenplatten 12,12' fort. Diese sind im wesentlichen rechteckförmig ausgebildet und liegen mit ihrer Längserstreckungsrichtung quer zur Richtung der U-Schenkel 8,8' der Materialstege 6,6'. An die beiden einander abgewandten Schmalseiten 13,13' sind beabstandet voneinander Zungen 14 angesetzt, die zwischen sich die Aussparungen 15 bilden. Wichtig ist, daß die Zungen 14 und Aussparungen 15 einer Schmalseite 13 wechselständig mit den Zungen und Aussparungen der von ihr abgewandten Schmalseite 13' an der Hülsenplatte 12 angeordnet sind. Gleichzeitig bei dem Stanzvorgang zur Fertigung der Platine 1 aus dem Bandmaterial werden auf die Oberseite der Hülsenplatte 12,12' in drei nebeneinanderliegenden, etwa gleichgroßen Rechteckabschnitten 16 die Gewindepartien 17 aufgeprägt. Diese können beispielsweise, wie in Fig. 1, aus einer in sich schräg verlaufenden Riffelprägung 18 bestehen (siehe auch Fig. 6,7).

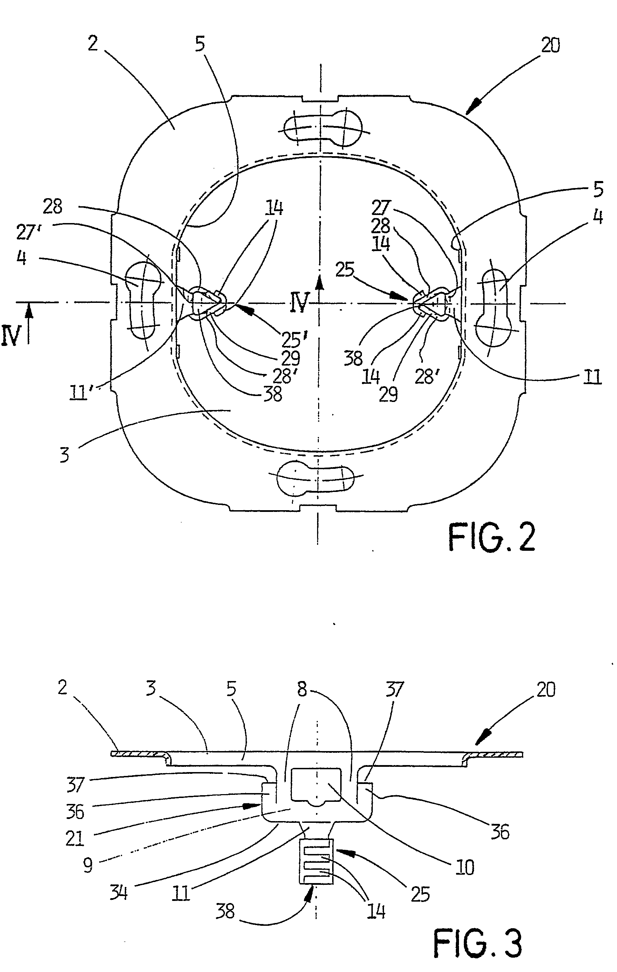

Die Platine 1 wird nach ihrer im ersten Fertigungsschritt vorgenommenen Stanzung und Prägung in mehreren Einzelschritten entlang der in Fig. 1 punktiert eingezeichneten Biegegeraden 19 zur Bildung des Tragringes 20 umgebogen. Der Flansch 2 verbleibt im wesentlichen in seinem ebenen, ringförmigen Zustand. Lediglich der Innenrand wird zur Stabilisierung und Versteifung umgekantet (Fig. 3). Durch eine Biegung der Platine 1 entlang der randseitigen Biegegeraden 19' werden die Materialstege 6,6' etwa rechtwinklig zur Flanschebene auf die gleiche Seite umgebogen. Die Materialstege 6,6' bilden damit die Spreizkrallenhalter 21,21', in deren Öffnung 10,10' die winkelhebelartig geformten Spreizkrallen 22,22' eingesetzt sind (Fig. 5). Die Spreizkrallen 22,22' selbst weisen einen außenliegenden, langen Hebelarm 23 auf, der durch Beaufschlagung des inneren kurzen Hebelarmes 24 parallel zur Richtung der Spreizkrallenhalter eine Abspreizbewegung nach außen vollführt, mittels derer der Tragring 20 in einer Wanddose fixierbar ist.

Entlang der Biegegeraden 19″ werden die Zwischenstege 11,11' in ihren Randbereichen nach innen abgekröpft.

In einem weiteren Fertigungsschritt werden die Hülsenplatten 12,12' entlang der Biegegeraden 19‴ zu einer im Querschnitt die Form eines gleichschenkligen Dreiecks aufweisenden Gewindehülse zusammengebogen, welche die Muttern 25,25' zur Aufnahme der Fixierschrauben 26 bilden. Die Muttern 25,25' weisen also im wesentlichen einen in der Ebene der U-Schenkel 8,8' der Materialstege 6,6' verlaufenden Befestigungsschenkel 27,27' auf, aus dessen Ebene die beiden Biegeschenkel 28,28'

in einem Keilwinkel von etwa 60° aus- und aufeinanderzu gebogen sind. Diese Ausbiegung erfolgt so lange, bis die beiden Schmalseiten 13,13' der Hülsenplatten 12,12' aneinander anliegen und die Dreieckquerschnittsform bilden. Durch die wechselständige Anordnung der Zungen 14 und Aussparungen 15 greifen die jeweils an einer Schmalseite 13 angeformten Zungen 14 in die Aussparungen 15 der daran anliegenden Schmalseiten 13' ein. Darauf werden die Zungen 14 weiter umgebogen, bis sie an der Außenseite 29 des gegenüberliegenden Biegeschenkels 28,28' unter Formschluß anliegen. Durch die Abbiegung der Hülsenplatte zu den im Quer schnitt dreieckigen Muttern 25 liegen die Gewindepartien 17 radial am nächsten zur Längsachse der Muttern 25,25'. Damit können die Fixierschrauben 26,26' in die Gewindepartien 17 eingreifen und eingeschraubt werden. Die Köpfe 30 der Fixierschrauben 26 beaufschlagen dabei den inneren Hebelarm 24 der Spreizkrallen 22,22'. Durch das Einschrauben der Fixierschrauben 26,26' kann also die Spreizbewegung der Spreizkrallen 22,22' hervorgerufen werden.

In Fig. 5 ist das elektrische Installationsgerät einbaufertig zur Montage in eine Wanddose gezeigt. Der Gerätesockel 31 ist dabei von der Rückseite 32 des Tragringes 20 her in diesen eingesetzt worden und stützt sich mit einer umlaufenden Konsole 33 an der von der U-Basis 9,9' gebildeten Anlagekante 34 der Spreizkrallenhalter 21,21' ab. Damit ist der Gerätesockel 31 gegen eine Verschiebung nach vorne gesichert. Um eine Verschiebung zur Rückseite hin zu verhindern, weist das Isoliergehäuse des Gerätesockels 31 darüber hinaus im Bereich der Spreizkrallenhalter 21,21' Schrägschultern 35 auf. In Einbaustellung werden diese in einer von der Rückseite 32 abgewandten Richtung von Lappen 36 beaufschlagt, die zu beiden Seiten der U-Schenkel 8,8' der Materialstege 6,6' einstückig an diese angesetzt sind. Nach dem Einsetzen des Gerätesockels 31 in den Tragring 20 werden die in Richtung des Flansches 2 weisenden Freienden 37 der Lappen 36 nach innen gebogen, wodurch sie die in Fig. 5 gezeigte Beaufschlagungsstellung gegenüber den Schrägschultern 35 einnehmen.

In den Fig. 6 bis 8 ist eine erste Ausführungsform für die Gewindepartien 17 dargestellt. Wie bereits vorher beschrieben sind diese als Riffelprägung 18 in die Rechteckabschnitte 16 der Hülsenplatte 12 eingebracht. Die Gewindepartien 17 wirken als lehren haltiges Innengewinde 38 mit der Fixierschraube 26 zusammen.

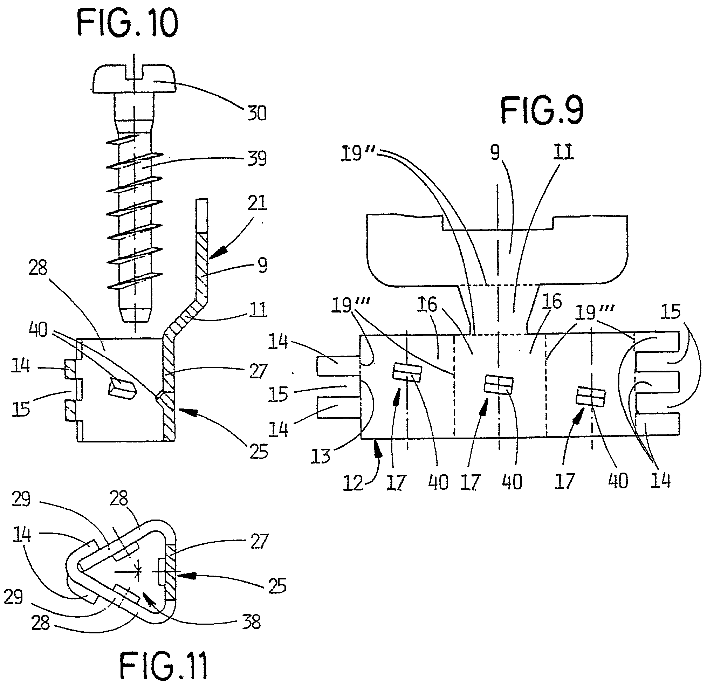

Zeichnerisch nicht dargestellt ist eine Alternative, bei der die Gewindepartien 17 durch einzelne Finger etwa quadratischen Querschnitts gebildet sind, die beim Bilden der angeformten Mutter räumlich verwunden werden. Die scharfen Kanten dieser Finger wirken dabei als Gewindegänge. Diese Alternative ist besonders geeignet, wenn sogenannte Blechschrauben mit großer Gewindetiefe Verwendung finden. Eine Weiterbildung dieser Variante ist in den Fig. 9 bis 11 dargestellt. Hier bestehen die Gewindepartien 17 als über die Hülsenplatte 12 schräg verlaufend angeordnete Vorsprünge 40, die durch kleine Stanzschnitte und anschließendem Ausbiegen der gestanzten Partien aus der Ebene der Hülsenplatte 12 gebildet sind.

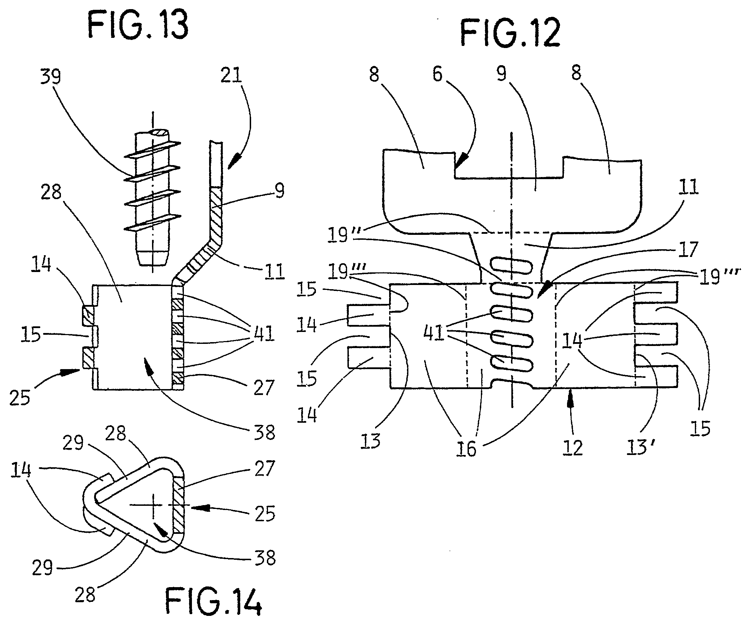

Eine weitere Alternative ist in den Fig. 12 bis 14 gezeigt, wo die Gewindepartien 17 aus einer Reihe von zueinander schräggestellten, langlochartigen Stanzausnehmungen 41 bestehen, in denen die tiefen Gewindegänge der Blechschraube 39 Halt finden.

In den Detaildarstellungen der Fig. 6 bis 14 sind neben der genauen Darstellung der Gewindepartien 17 auch die Zungen 14 und Aussparungen 15 besonders deutlich gezeigt.

**Patentansprüche**

1. Verfahren zur Herstellung eines elektrischen Installationsgerätes, wie Steckdose, Lichtschalter od.dgl. zumindest bestehend aus
- einem Tragring (20) zur Halterung des Installationsgerätes in einer Wanddose und
- einem Gerätesockel (31),
mit folgenden Verfahrensschritten:
- Aus einem band- oder plattenförmigen Flachmaterial, wie Metallblech od.dgl. wird eine im Herstellungsendzustand den Tragring (20) bildende Platine (1) ausgestanzt, die im Flachzustand mindestens
-- einen ebenen, ringförmigen Flansch (2),
-- mindestens zwei im Herstellungsendzustand jeweils einen Spreizkrallenhalter (21,21') bildende, an den Innenrand (5,5') des Flanschteiles (2) in Gegenüberstellung angesetzte, vorzugsweise U-förmige Materialstege (6,6') und
-- an die Innenenden (U-Basis 9,9') der Materialstege (6,6') über Zwischenstege (11,11') angesetzte, im Herstellungsendzustand jeweils eine Gewindehülse (Mutter 25,25') bildende Hülsenplatten (12,12') aufweist;
- darauffolgend oder gleichzeitig mit dem Stanzvorgang werden auf die Hülsenplatten (12,12') der Platine (1) im Herstellungsendzustand die Gewindegänge der Gewindehülsen (Muttern 25,25') bildende Gewindepartien (17) mittels spanloser Formgebung eingebracht;
- die Materialstege (6,6') werden zur Bildung der Spreizkrallenhalter (21,21') etwa rechtwinklig zur Flanschebene abgebogen;
- die einander abgewandten Seitenkanten (Schmalseiten 13,13') der Hülsenplatten (12,12') werden jeweils zu einer in ihrer Längsachse etwa rechtwinklig zur Flanschebene angeordneten Gewindehülse (Mutter 25,25') mit innenliegenden Gewindepartien (17) zusammengeführt;
- in die Gewindehülsen (Muttern 25,25') werden jeweils Fixierschrauben (26) eingeschraubt, die die Innenenden der in die Spreizkrallenhalter (21,21') beweglich eingesetzten Spreizkrallen (22,22') beaufschlagen; und
- in den Tragring (20) wird der Gerätesockel (31) eingesetzt und fixiert.

2. Verfahren nach Anspruch 1, dadurch gekennzeichnet, daß beim Stanzvorgang an die einander abgewandten Seitenkanten (Schmalseiten 13,13') der Hülsenplatten (12,12') jeweils wechselständig abstehende, zwischen sich Ausnehmungen (Aussparungen 15) bildende Zungen (14) angeformt werden.

3. Verfahren nach Anspruch 2,
dadurch gekennzeichnet,
daß beim Zusammenführen der einander abgewandten Seitenkanten (Schmalseiten 13,13′) der Hülsenplatten (12,12′) zur Bildung der Gewindehülsen (Muttern 25,25′) jeweils wechselseitig die abstehenden Zungen (14) an einer Seitenkante (Schmalseite 13) in die Ausnehmungen (Aussparungen 15) der gegenüberliegenden Seitenkante (Schmalseite 13′) eingeführt werden.

4. Verfahren nach Anspruch 3,
dadurch gekennzeichnet,
daß zur Sicherung der Gewindehülsen (Muttern 25,25′) gegen Aufspreizen die Zungen (14) vorzugsweise bis zu ihrer Parallelanlage an der Außenseite (29) der Gewindehülse (Mutter 25,25′) abgebogen werden.

5. Verfahren nach einem der vorgenannten Ansprüche,
dadurch gekennzeichnet,
daß die Zwischenstege (11,11′) zwischen den Materialstegen (6,6′) und der Gewindehülse (Mutter 25,25′) zu deren Parallelverschiebung gegenüber den Spreizkrallenhaltern (21,21′) nach innen abgekröpft werden.

6. Verfahren nach einem der vorgenannten Ansprüche,
dadurch gekennzeichnet,
daß die Hülsenplatten (12,12′) zur Bildung der Gewindehülsen (Muttern 25,25′) jeweils entlang zweier parallel zu ihren Seitenkanten (Schmalseiten 13,13′) verlaufenden, die Hülsenplatte (12,12′) in drei nebeneinanderliegende Rechteckabschnitte (16) etwa gleicher Abmessungen teilender Biegegeraden (19) derart abgebogen werden, daß die Gewindehülsen (Muttern 25,25′) im Querschnitt etwa die Form eines gleichschenkligen Dreiecks aufweisen.

7. Verfahren nach Anspruch 6,
dadurch gekennzeichnet,
daß die Gewindepartien (17) jeweils im Mittenbereich der Rechteckabschnitte (16) eingebracht werden.

8. Verfahren nach einem der vorgenannten Ansprüche,
dadurch gekennzeichnet,
daß die Gewindepartien (17) als Riffelprägung (18) in die Hülsenplatten (12,12′) eingeformt werden.

9. Verfahren nach einem der Ansprüche 1 bis 7,
dadurch gekennzeichnet,
daß die Gewindepartien (17) als diagonal über die Hülsenplatten (12,12′) verlaufend angeordnete Vorsprünge (40) eingeformt werden.

10. Verfahren nach einem der Ansprüche 1 bis 7,
dadurch gekennzeichnet,
daß die Gewindepartien (17) als reihenartig angeordnete Stanzausnehmungen (41) in die Hülsenplatten (12,12′) eingeformt werden.

11. Verfahren nach einem der vorgenannten Ansprüche,
dadurch gekennzeichnet,
daß mit der Ausstanzung der Platine (1) parallel zu den die Spreizkrallenhalter (21,21′) bildenden Materialstege (6,6′) verlaufende Lappen (36) ausgebildet werden, die nach der Biegung der Platine (1) zum Tragring (20) und dem Einsetzen des Gerätesockels (31) mit ihren Freienden (37) einwärts gebogen werden, um den Gerätesockel (31) im Tragring (20) zu fixieren.

12. Elektrisches Installationsgerät, wie Steckdose, Lichtschalter od.dgl. zur Montage in einer Wanddose
- einem die Anschlußkontakte für die Wandversorgungsleitungen und die externen Anschluß- bzw. Bedienungselemente tragenden Gerätesockel (31) und
- einem den Gerätesockel (31) in der Wanddose fixierenden Tragring (20)
-- mit einem ebenen, ringförmigen Flansch (2), der in Einbaustellung im wesentlichen planparallel zur Wand an deren Randbereich zur Wanddose anliegt,
-- mit mindestens zwei etwa rechtwinklig vom Innenrand (5,5′) des Flansches (2) in die Wanddose hineinstehenden, einstückig angeformten Spreizkrallenhaltern (21,21′), in denen jeweils in einer Öffnung (10,10′) eine Spreizkralle (22,22′) beweglich einliegt,
-- mit an die Freienden der Spreizkrallenhalter (21,21′) jeweils einstückig angeformten Muttern (25,25′) zur mit ihren Längsachsen etwa rechtwinklig zur Flanschebene verlaufenden Aufnahme jeweils einer die Spreizkrallen (22,22′) beaufschlagenden Fixierschraube (26),
dadurch gekennzeichnet,
daß die Muttern (25,25′) als mit dem Tragring (20) einstückige Stanzbiegeteile ausgebildet sind, deren Innengewinde (38) mittels spanloser Werkstückbearbeitung eingeformt ist.

13. Installationsgerät nach Anspruch 12,
dadurch gekennzeichnet,
daß die Innengewinde (38) jeweils aus mehreren einzelnen Gewindepartien (17) zusammengesetzt sind.

14. Installationsgerät nach Anspruch 12 oder 13,
dadurch gekennzeichnet,
daß die Muttern (25,25′) im Querschnitt etwa die Formgestalt eines gleichschenkligen Dreiecks aufweisen, in dessen Schenkel die Gewindepartien (17) zur Bildung des Innengewindes (38) eingeformt sind.

15. Installationsgerät nach Anspruch 14,
dadurch gekennzeichnet,
daß ein Schenkel der Mutter (25,25′) als Befestigungsschenkel (27,27′)
- mit dem Spreizkrallenhalter (21,21′) über einen Zwischensteg (11,11′) einstückig verbunden und
- parallel zum Spreizkrallenhalter (21,21′) ausgerichtet ist.

16. Installationsgerät nach Anspruch 15,
dadurch gekennzeichnet,
daß die einstückig beiderseits des Befestigungsschenkels (27,27′) angesetzten Biegeschenkel (28,28′) der Mutter (25,25′) an ihren Freienden wechselständig Zungen (14) und Aussparungen (15) aufweisen, die wechselseitig vorzugsweise unter Formschluß in die jeweils durch die Zungen (14) des gegenüberliegenden Biegeschenkels (27,27′) gebildeten Aussparungen (15) eingreifen.

17. Installationsgerät nach Anspruch 16,
dadurch gekennzeichnet,
daß die Freienden der Zungen (14) eines Biegeschenkels (27) zur Parallelanlage an der Außenseite (29) des jeweils gegenüberliegenden Biegeschenkels (27') umgebogen sind.

18. Installationsgerät nach einem der Ansprüche 12 bis 17,
dadurch gekennzeichnet,
daß die Gewindepartien (17) jeweils aus einer Riffelprägung (18) bestehen.

19. Installationsgerät nach einem der Ansprüche 12 bis 17,
dadurch gekennzeichnet,
daß die Gewindepartien (17) von jeweils von den Innenseiten der Mutternschenkel (27,27',28,28') abstehenden Vorsprüngen (40) gebildet sind.

20. Installationsgerät nach einem der Ansprüche 12 bis 17,
dadurch gekennzeichnet,
daß die Gewindepartien (17) jeweils von in die Mutternschenkel (27,27',28,28') eingebrachten Stanzausnehmungen (41) gebildet sind.

21. Installationsgerät nach einem der Ansprüche 12 bis 20
dadurch gekennzeichnet,
daß die Längsachsen der Muttern (25,25') durch Abkröpfung der Zwischenstege (11,11') gegenüber der Ebene der Spreizkrallenhalter (21,21') jeweils parallel nach innen versetzt angeordnet sind.

22. Installationsgerät nach einem der Ansprüche 12 bis 21,
dadurch gekennzeichnet,
daß die rechtwinklig zur Flanschebene verlaufenden Seitenkanten der Spreizkrallenhalter (21,21') von einstückig angesetzten Biegelappen (36) flankiert sind, deren zum Flansch (2) weisende Freienden (37) in Einsetzstellung des Gerätesockels (31) diesen beaufschlagen.

23. Installationsgerät nach Anspruch 22,
dadurch gekennzeichnet,
daß der Gerätesockel (31) im Beaufschlagungsbereich der Biegelappen (36) jeweils eine Schrägschulter (35) aufweist.

24. Installationsgerät nach einem der Ansprüche 12 bis 23,
dadurch gekennzeichnet,
daß jeder Spreizkrallenhalter (21,21') an seinem dem Flansch (2) abgewandten Freiende eine an eine Konsole (33) des Gerätesockels (31) anlegbare, etwa parallel zur Flanschebene verlaufende Anlagekante (34) aufweist.

**Claims**

1. A method for making an electrical installation device, such as a socket, a light switch, or similar, consisting at least of
- a ring support (20) for holding the installation device in a wall socket and
- a device base (31),
with the following process stages:
a blank (1) is stamped out of a flat material in strip or plate form, such as sheet metal or similar, forming the ring support (20) in the final manufacturing stage which, in its flat state, has at least
- a flat annular flange (2),
- at least, two, preferably channel-shaped, material-connecting pieces (6, 6') respectively forming an expansion claw holder (21, 21') in the final manufacturing stage, which connecting pieces are added, in a position facing each other, to the inner edge (5, 5') of the flange component (2) and
- sleeve sheets (12, 12') joined to the inner ends (channel base 9, 9') of the material-connecting pieces (6, 6') via intermediate connecting pieces (11, 11'), respectively forming a threaded sleeve (nut 25, 25') in the final manufacturing stage;
- subsequent to, or simultaneously with the stamping process, the thread portions (17) forming the threads of the threaded sleeves (nuts 25, 25') in the final manufacturing stage, are inserted into the sleeve sheets (12, 12') of the blank (1) by means of non-cutting forming;
- the material-connecting pieces (6, 6') are bent approximately at right angles to the flange plane to form the expansion claw holders (21, 21');
- the side edges (narrow sides 13, 13') of the sleeve sheets (12, 12') facing away from each other, are brought together respectively into a threaded sleeve (nut 25, 25') with internal thread portions (17), with its longitudinal axis arranged approximately at right angles to the flange plane;
- mounting screws (26) are respectively screwed into the threaded sleeves (nuts 25, 25'), which are bearings on the inner ends of the expansion claws (22, 22') displaceably inserted into the expansion claw holders (21, 21'); and
- the device base (31) is inserted and fixed in the ring support (20).

2. A method according to claim 1, characterized in that in the stamping process, tongues (14) are formed on the side edges (narrow sides 13, 13') of the sleeve sheets (12, 12'), facing away from each other, which project alternately and from recesses (cut outs 15).

3. A method according to claim 2, characterized in that as the side edges (narrow sides 13, 13') facing away from each other, of the sleeve sheets (12, 12') are brought together to form the threaded sleeve (nut 25, 25'), the tongues (14) projecting on one side edge (narrow side 13) are respectively introduced into the recesses (cut outs 15) of the opposite side edge (narrow side (13').

4. A method according to claim 3, characterized in that the tongues (14) are bent, preferably until they bear in a parallel position on the outside (29) of the threaded sleeve (nut 25, 25'), to secure the threaded sleeves (nuts 25, 25') against coming apart.

5. A method according to one of the preceding claims, characterized in that the intermediate connecting pieces (11, 11') are offset inwards between the material-connecting pieces (6, 6') and the threaded sleeve (nut 25, 25') for their parallel displacement in relation to the expansion claw holders (21, 21').

6. A method according to one of the preceding claims, characterized in that in order to form the threaded sleeves (nuts 25, 25'), the sleeve sheets (12, 12') are respectively bent along two bend lines extending parallel to their side edges (narrow sides 13, 13') and dividing the sleeve sheet (12, 12') into three rectangular sections (16) of approximately equal dimensions lying next to one another, in such a way that the threaded sleeves (nuts 25, 25') approximately have the shape of an isosceles triangle in cross section.

7. A method according to claim 6, characterized in that the thread portions (17) are respectively arranged in the central portion of the rectangular sections (16).

8. A method according to one of the preceding claims, characterized in that the thread portions (17) are stamped into the sleeve sheets (12, 12') as a ridge formation (18).

9. A method according to one of claims 1 to 7, characterized in that the thread portions (17) are formed in as projections (40) arranged to extend diagonally over the sleeve sheets (12, 12').

10. A method according to one of claims 1 to 7, characterized in that the thread portions (17) are formed in the sleeve sheets (12, 12') as stamped cut outs (41) arranged in rows.

11. A method according to one of the preceding claims, characterized in that tabs (36) are formed together with the stamping of the blank (1) which extend parallel to the material-connecting pieces (6, 6') forming the expansion claw holders (21, 21'), which tabs are bent inwards at their free ends (37) after the blank (1) has been bent into the ring support (20) and the device base (31) has been inserted, in order to fix the divice base (31) in the ring support (20).

12. An electrical installation device, such as a socket, a light switch or similar, for mounting in a wall socket with
– a device base (31) carrying the connecting contacts for the wall wiring and the external connecting or operating elements and
– a ring support (20) fixing the device base (31) in the wall socket
– with a flat annular flange (2) which, in the installed position, bears substantially plane parallel to the wall in its border zone next to the wall socket
with at least two integrally formed-on expansion claw holders (21, 21') projecting approximately at right angles from the inner edge (5, 5') of the flange (2) into the wall socket wherein an expansion claw (22, 22') is displaceably inserted in a respective opening (10, 10'),
– with nuts (25, 25') integrally formed-on respectively on the free ends of the expansion claw holders (21, 21') with the purpose of receiving, along their longitudinal axes in a direction extending approximately at right angles to the flange plane, a respective mounting screw (26) acting on the expansion claws (22, 22'), characterized in that
the nuts (25, 25') are formed, together with the ring support (20), as integral stamped components, the inner thread (38) whereof is formed in by means of non-cutting component processing.

13. An installation device according to claim 12, characterized in that the internal threads (38) are respectively composed of several individual thread portions (17).

14. An installation device according to claim 12 or 13, characterized in that the nuts (25, 25') approximately have the shape of an isosceles triangle in cross section, in the sides whereof, the thread portions (17) are formed in to create the internal thread (38).

15. An installation device according to claim 14, characterized in that one side of the nut (25, 25') is integrally joined as the mounting side (27, 27')
– to the expansion claw holder (21, 21') via an intermediate connecting piece (11, 11') and
– is orientated parallel to the expansion claw holder (21, 21').

16. An installation device according to claim 15, characterized in that the bent sides (28, 28') of the nut (25, 25') which are integrally added on both sides of the mounting side (27, 27') have, at their free ends, alternate tongues (14) and cut outs (15) engaging alternately and preferably with formlocking in the cut outs (15) respectively formed by the tongues (14) of the opposite bent side (27, 27').

17. An installation device according to claim 16, characterized in that the free ends of the tongues (14) of a bent side (27) are bent round to bear in parallel on the outer side (29) of the respective opposite bent side (27').

18. An installation device according to one of claims 12 to 17, characterized in that the thread portions (17) respectively consist of a stamped ridge formation (18).

19. An installation device according to one of claims 12 to 17, characterized in that the thread portions (17) are respectively formed by projections (40) sticking out from the inner faces of the nut sides (27, 27', 28, 28').

20. An installation device according to one of claims 12 to 17, characterized in that the thread portions (17) are respectively formed by stamped cut outs (41) introduced into the nut sides (27, 27', 28, 28').

21. An installation device according to one of claims 12 to 20, characterized in that the longitudinal axes of the nuts (25, 25') are each offset parallel towards the inside by offsetting the intermediate connecting pieces (11, 11') in relation to the plane of the expansion claw holders (21, 21').

22. An installation device according to one of claims 12 to 21, characterized in that the side edges of the expansion claw holders (21, 21'), extending at right angles to the flange plane, are flanked by integrally added bent tags (36), whose free ends (37) pointing towards the flange (2) bear on the device base (31) in the fitted position of the latter.

23. An installation device according to claim 22, characterized in that the device base (31) has an inclined shoulder (35) respectively in the bearing zone of the bent tags (36).

24. An installation device according to one of claims 12 to 23, characterized in that each one of the expansion claw holders (21, 21') has, on its free end turned away from the flange (2), a bearing edge (34) extending approximately parallel to the flange plane which can be applied to a bracket (33) of the device base (31).

## Revendications

1. Procédé de fabrication d'un appareil d'installation électrique tel qu'une prise de courant, un commutateur d'éclairage ou analogue, constitué au moins par
- un anneau-support (20) pour maintenir l'appareil d'installation dans une boîte murale, et
- un socle d'appareil (31), avec les étapes de procédé suivantes:
- à partir d'un matériau plat en forme de bande ou de plaque, tel que tôle métallique ou analogue, on découpe une platine (1) qui, en condition finale de fabrication, constituera l'anneau-support (20) et qui, en condition "à plat", présente au moins
- une bride plane annulaire (2),
- au moins deux barrettes (6, 6'), de préférence en forme de U, qui, dans la condition finale de fabrication, constituent chacune un organe de retenue de griffe expansible (21, 21') et qui sont aménagées en vis-à-vis sur le bord intérieur (5, 5') de la partie bride (2), et
- des plaques de douille (12, 12') qui sont rattachées aux extrémités intérieures (bases 9, 9' des U) des barrettes (6, 6') par des âmes intermédiaires (11, 11') et qui, dans la condition finale de fabrication, constituent chacune une douille filetée (écrous 25, 25');
- simultanément au découpage, ou à la suite de celui-ci, on aménage, par façonnage sans enlèvement de copeaux, sur les plaques de douille (12, 12') de la platine (1) des parties de filetage (17) constituant, dans la condition finale de fabrication, les filetages des douilles filetées (écrous 25, 25');
- pour former les organes de retenue de griffe expansible (21, 21'), on rabat les barrettes (6, 6'), sensiblement à angle droit par rapport au plan de la bride;
- on rapproche l'une de l'autre les arêtes latérales mutuellement éloignées (côtés étroits 13, 13') des plaques de douille (12, 12'), en formant à chaque fois une douille filetée (écrou 25, 25') dont l'axe longitudinal est agencé sensiblement perpendiculairement au plan de la bride, les parties de filetage (17) étant en position intérieure;
- dans chaque douille filetée (écrous 25, 25') on visse une vis de fixation (26), ces vis sollicitant les extrémités intérieures de griffes expansibles (22, 22') insérées mobiles dans les organes (21, 21') de retenue de griffe expansible; et
- on insère et fixe le socle d'appareil (31) dans l'anneau-support (20).

2. Procédé selon revendication 1, caractérisé, par le fait que, lors du découpage, on forme, sur les arêtes latérales mutuellement éloignées (côtés étroits 13, 13') que comportent les plaques de douille (12, 12'), des languettes (14) formant à chaque fois des saillies alternées, entre lesquelles sont formés des évidements (échancrures 15).

3. Procédé selon revendication 1, caractérisé, par le fait que, lors du rapprochement des arêtes latérales mutuellement éloignées (côtés étroits 13, 13') des plaques de douille (12, 12'), pour former les douilles filetées (écrous 25, 25'), on introduit à chaque fois, de manière alternée, les languettes (14) en saillie sur une arête latérale (côté étroit 13) dans les évidements (échancrures 15) de l'arête latérale (coté étroit 13') opposée.

4. Procédé selon revendication 3, caractérisé, par le fait que, pour empêcher les douilles filetées (écrous 25, 25') de s'ouvrir, on rabat les languettes (14), de préférence jusqu'à ce qu'elles soient parallèles et adjacentes au côté extérieur (29) de la douille filetée (écrou 25, 25').

5. Procédé selon l'une des revendications précédentes, caractérisé, par le fait que l'on contrecoude vers l'intérieur les âmes intermédiaires (11, 11') entre les barrettes (6, 6') et les douilles filetées (écrous 25, 25'), de manière à les décaler parallèlement par rapport aux organes (21, 21') de retenue des griffes expansibles.

6. Procédé selon l'une des revendications précédentes, caractérisé, par le fait que les plaques de douille (12, 12'), pour former les douilles filetées (écrous 25, 25'), sont rabattues, à chaque fois le long de deux droites de pliage (19) qui sont parallèles à leurs arêtes latérales (côtés étroits 13, 13') et partagent la plaque de douille (12, 12') en trois portions rectangulaires (16) situées côte à côte, ayant des dimensions à peu près égales, de manière que les douilles filetées (écrous 25, 25') présentent, quant à leur section droite, sensiblement la forme d'un triangle équilatéral.

7. Procédé selon revendication 6, caractérisé, par le fait que les parties de filetage (17) sont aménagées à chaque fois dans la région médiane des portions rectangulaires (16).

8. Procédé selon l'une des revendications précédentes, caractérisé, par le fait que les parties de filetage (17) sont façonnées en tant qu'empreintes cannelées (18) dans les plaques de douille (12, 12').

9. Procédé selon l'une des revendications 1 à 7, caractérisé, par le fait que les parties de filetage (17) sont façonnées sous la forme de saillants (40) à tracé en diagonale sur les plaques de douille (12, 12').

10. Procédé selon l'une des revendications 1 à 7, caractérisé, par le fait que les parties de filetage (17) sont façonnées sous la forme d'évidements découpés (41) agencés en rang dans les plaques de douille (12, 12').

11. Procédé selon l'une des revendications précédentes, caractérisé, par le fait qu'avec le découpage de la platine (1) on forme des pattes (36) à tracé parallèle aux barrettes (6, 6') constituant les organes (21, 21') de retenue des griffes expansibles, pattes qui, après le pliage de la platine (1) pour constituer l'anneau-support (20) et après l'insertion du socle d'appareil (31), ont leurs extrémités libres (37) pliées vers l'intérieur, pour fixer le socle d'appareil (31) dans l'anneau-support (20).

12. Appareil d'installation électrique, tel que prise de courant, commutateur d'éclairage ou analogue, pour montage dans une boîte murale, comportant
- un socle d'appareil (31) portant les contacts de raccordement pour les lignes d'alimentation murales et les éléments externes de raccordement ou de commande, et
- un anneau-support (20) fixant le socle d'appareil (31) dans la boîte murale, cet anneau-support comportant

– une bride annulaire plane (2) qui, en position montée, s'applique sensiblement plan-parallèlement au mur, en sa région marginale, contre la boîte murale,

– au moins deux organes (21, 21') de retenue de griffes expansibles qui, formés d'une seule pièce avec la bride, partent à angle droit du bord intérieur (5, 5') de la bride (2) et pénètrent dans la boîte murale, chacun d'eux ayant une ouverture (10, 10') dans laquelle s'engage de manière mobile une griffe expansible (22, 22'),

– des écrous (25, 25') formés à chaque fois d'une seule pièce sur les extrémités libres des organes (21, 21') de retenue de griffes expansibles, pour recevoir, en ayant leurs axes longitudinaux sensiblement à angle droit par rapport au plan de la bride, chacun une vis de fixation (26) sollicitant les griffes expansibles (22, 22'), caractérisé par le fait que les écrous (25, 25') sont réalisés en tant que parties découpées-pliées qui sont d'un seul tenant avec l'anneau-support (20) et dont les filetages intérieurs (38) sont façonnés par usinage sans enlèvement de copeaux.

13. Appareil d'installation selon revendication 12, caractérisé par le fait que chaque filetage intérieur (38) est composé de plusieurs parties de filetage individuelles (17).

14. Appareil d'installation selon revendication 12 ou 13, caractérisé par le fait que les écrous (25, 25') présentent, en coupe transversale, sensiblement la forme d'un triangle équilatéral dans les côtés duquel les parties de filetage (17) sont façonnées pour constituer le filetage intérieur (38).

15. Appareil d'installation selon revendication 14, caractérisé par le fait qu'un côté de l'écrou (25, 25') est, en tant qu'aile de fixation (27, 27'),

– relié, par une âme intermédiaire (11, 11'), à l'organe (21, 21') de retenue de griffe expansible avec lequel il est d'un seul tenant, et

– est dirigé parallèlement à l'organe (21, 21') de retenue de griffe expansible.

16. Appareil d'installation selon revendication 15, caractérisé par le fait que les côtés (28, 28') de l'écrou (25, 25') se rattachant de part et d'autre du côté fixation (27, 27') avec lequel ils sont d'un seul tenant présentent, en leurs extrémités libres, des languettes (14) et échancrures (15) alternées qui s'engagent selon un motif alterné, de préférence en formant une liaison mécanique positive, dans les échancrures (15) formées à chaque fois par les languettes (14) du côté opposé (27, 27').

17. Appareil d'installation selon revendication 16, caractérisé par le fait que les extrémités libres des languettes (14) d'un côté (27) sont rabattues de manière à être en contact parllèle contre le côté extérieur (29) du côté à chaque fois opposé (27').

18. Appareil d'installation selon l'une des revendications 12 à 17, caractérisé par le fait que les parties de filetage (17) sont constituées à chaque fois par un estampage en forme de cannelure (18).

19. Appareil d'installation selon l'une des revendications 12 à caractérisé par le fait que les parties de filetage (17) sont constituées par des reliefs (40) formant des saillies depuis les faces internes des côtés des écrous (27, 27', 28, 28').

20. Appareil d'installation selon l'une des revendications 12 à 17, caractérisé par le fait que les parties de filetage (17) sont constituées chacune par des évidements découpés (41) aménagés dans les côtés des écrous (27, 27', 28, 28').

21. Appareil d'installation selon l'une des revendications 12 à 20, caractérisé par le fait que, par contrecoudage des âmes intermédiaires (11, 11'), les axes longitudinaux des écrous (25, 25') sont décalés vers l'intérieur par rapport au plan des organes (21, 21') de retenue des griffes expansibles, en lui étant à chaque fois parallèle.

22. Appareil d'installation selon l'une des revendications 12 à 21, caractérisé par le fait que les arêtes latérales des organes (21, 21') de retenue des griffes expansibles, lesquels sont à angle droit par rapport au plan de la bride, sont flanqués par des pattes flexibles (36) s'y rattachant d'un seul tenant, dont les extrémités libres (37) dirigées vers la bride (2) sollicitent le socle d'appareil (31) lorsque celui-ci est en position d'insertion.

23. Appareil d'installation selon revendication 22, caractérisé par le fait que le socle d'appareil (31) présente un épaulement oblique (35) dans chaque région de sollicitation des pattes flexibles (36).

24. Appareil d'installation selon l'une des revendications 12 à 23, caractérisé par le fait que chaque organe (21, 21') de retenue de griffe expansible présente, en son extrémité libre, éloignée de la bride (2), une arête de contact (34) qui suit un tracé sensiblement parallèle au plan de la bride et qui peut être appliquée contre une console (33) du socle d'appareil (31).

FIG.1

FIG. 2

FIG. 3

FIG. 4

FIG. 5

FIG.7

FIG.8

FIG. 6

# FIG.10

# FIG.9

# FIG.11

# FIG.13

39
21
28
9
14
11
15
41
25
27
38

# FIG.12

8  6  9  8
19″
19‴
15
14
15
14
13
16
11
17
19‴r
41
14
15
12
13′

# FIG.14

29  28
14
27
25
29  38
28